(19) Europäisches Patentamt / European Patent Office / Office européen des brevets

(11) **EP 3 124 937 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
*G01L 19/04* *(2006.01)*    *G01L 9/12* *(2006.01)*
*G01L 9/00* *(2006.01)*

(21) Anmeldenummer: **15178956.7**

(22) Anmeldetag: **29.07.2015**

(54) **VERFAHREN ZUM ERMITTELN EINES DRUCKES SOWIE ENTSPRECHENDE MESSANORDNUNG**

METHOD FOR DETERMINING A PRESSURE AND MEASURING ASSEMBLY FOR SAME

PROCEDE DE DETERMINATION D'UNE PRESSION ET SYSTEME DE MESURE ASSOCIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.02.2017 Patentblatt 2017/05**

(73) Patentinhaber: **VEGA Grieshaber KG**
**77709 Wolfach (DE)**

(72) Erfinder:
• **Jacob, Jörn**
  **77709 Wolfach (DE)**

• **Weller, Bernhard**
  **77709 Wolfach (DE)**
• **Seiffe, Johannes**
  **77736 Zell a. H. (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
**EP-A1- 0 764 839**    **EP-A1- 0 856 726**
**EP-A1- 2 189 774**    **EP-A2- 1 186 875**
**WO-A1-2015/090771**    **US-A1- 2003 221 491**

**Beschreibung**

Die vorliegende Erfindung betrifft ein Verfahren zum Ermitteln eines Druckes eines Fluids gemäß dem Oberbegriff des Patentanspruchs 1 sowie eine Messanordnung zum Ermitteln eines Drucks eines Fluids gemäß dem Oberbegriff des Patentanspruchs 10.

Aus dem Stand der Technik sind verschiedentlich Verfahren zum Ermitteln eines Druckes eines Fluids sowie Messanordnungen dafür bekannt, bei denen mittels eines Temperatursensors, der in die Druckmesszelle integriert ist, ein statischer Temperaturfehler bei der Druckmessung kompensiert bzw. korrigiert wird. Bei keramischen Druckmesszellen ist dieser Temperatursensor meistens auf der Rückseite eines Grundkörpers der Druckmesszelle angeordnet, kann aber auch in einer rückseitig der Druckmesszelle angeordneten Auswerteelektronik sitzen.

Derartige Druckmesszellen sind beispielsweise aus der DE 41 11 118 A1 oder der EP 0 764 839 A1 bekannt. Weitere Druckmesszellen mit Temperatursensoren sind aus der WO 2015/090771 A1 oder der EP 1 186 875 A2 bekannt. EP 2 189 774 A1 beschreibt eine Druckmesszelle mit Temperaturkompensation, bei der aber kein Temperatursensor eingesetzt wird. US 2003/221491 A1 offenbart ein Verfahren zur digitalen Kontrolle eines Sensors, insbesondere der Temperatur des Sensors. EP 0 856 726 A1 offenbart die Temperaturkompensation eines Messsystems anhand eines von der zeitlichen Temperaturdifferenz des Messsystems abhängigen Temperaturkoeffizients.

Wenn sich eine solche Druckmesszelle in thermischem Gleichgewicht mit ihrer Umgebung befindet, kann die Temperaturabhängigkeit der Druckmessung mit Hilfe eines solchen Temperatursensors und einer geeigneten Nachbearbeitung des Messwerts gut kompensiert werden. Verfahren zur Kompensation von Temperaturdifferenzen in einer Druckmesszelle und zur Korrektur der Messung der Druckmesszelle gegenüber dem Einfluss transienter Temperaturen sind beispielsweise aus der US 5,383,367 oder der US 5,394,345 bekannt.

Schnelle Änderungen der Temperatur könnten zu erheblichen Messfehlern führen, die mit den bekannten Verfahren nicht sinnvoll kompensierbar sind. Dieses Problem kann bei Druckmesszellen diverser Bauart auftreten, ist aber besonders schwerwiegend bei keramischen und metallischen Druckmesszellen mit dünnen Membranen.

Eine Möglichkeit der Messwertkompensation bzw. Messwertkorrektur bei innerhalb einer Druckmesszelle bestehen Temperaturgradienten, d. h. einer ungleichmäßigen Temperaturverteilung innerhalb der Messzelle ist in der EP 1 857 800 B1 angegeben.

Aus dieser Druckschrift ist ein Verfahren zum Ermitteln eines Druck seines Fluids mit Hilfe einer Druckmesszelle bekannt, wobei die Druckmesszelle einen Grundkörper, eine vorderseitig an dem Grundkörper angeordnete, durch den Druck des Fluids verformbare Membran sowie einen ersten und einen zweiten Temperatursensor aufweist. Der erste Temperatursensor ist geeignet ausgebildet und angeordnet, eine erste Temperatur der Membran und/oder des an die Membran angrenzenden Fluids zu erfassen und der zweite Temperatursensor ist geeignet ausgebildet und angeordnet, eine zweite Temperatur, beispielsweise des Grundkörpers und/oder eine mittlere Temperatur der Druckmesszelle zu erfassen.

In den meisten Fällen, in denen die Druckmesszelle einem thermischen Ungleichgewicht ausgesetzt ist, ist mit einem Temperaturunterschied zwischen einem auf die Membran der Messzelle einwirkenden Medium und der von dem Medium abgewandten, mit der Umgebung thermisch verbundenen Rückseite der Druckmesszelle, d. h. mit einem Temperaturgradienten von der Vorderzur Rückseite der Druckmesszelle zu rechnen. Der erste Temperatursensor ist daher vorzugsweise an der die Vorderseite der Druckmesszelle bildenden Membran, wo er Temperaturänderungen des Mediums schnell zu folgen vermag und der zweite an der von der Membran abgewandten Rückseite des Grundkörpers der Druckmesszelle angeordnet.

Eine Änderung der von der Druckmesszelle ausgegebenen Messwerte aufgrund eines solchen Temperaturgradienten ist auf durch den Temperaturgradienten verursachte innere Spannungen in der Messzelle zurückzuführen. Wenn nämlich die Membran der Druckmesszelle einer plötzlichen Temperaturänderung, beispielsweise aufgrund eines in seiner Temperatur geänderten Mediums, ausgesetzt ist, vermag die Membran dieser Temperaturänderung wesentlich schneller zu folgen als der Grundkörper der Druckmesszelle, der einerseits eine wesentlich höhere thermische Masse aufweist und andererseits von der Membran durch einen Zwischenraum oder eine Kammer beabstandet und damit gegen das Fluid thermisch isoliert ist.

Gleichzeitig hindert eine steife Verbindung zwischen Membran und Grundkörper die Membran daran, sich aufgrund der thermischen Auswirkungen frei lateral auszudehnen oder zusammenzuziehen, so dass die thermische Einwirkung die Membran dazu zwingt, sich zu krümmen. Diese Krümmung zu dem Grundkörper hin oder von dem Grundkörper weg bewirkt eine Verfälschung der Druckmessung. Gemäß dem Vorschlag der EP 1 857 800 B1 wird ausgehend von einer Änderungsgeschwindigkeit der von dem ersten Temperatursensor gemessenen Temperatur auf einen Temperaturgradienten in der Druckmesszelle geschlossen und ein von der Druckmesszelle gelieferter Messwert entweder verworfen oder korrigiert.

Der vorliegenden Erfindung liegt die Erkenntnis zugrunde, dass alleine durch die Bestimmung einer Temperatur oder einer Tempertaturänderung der Membran keine optimale Messwertkorrektur erzielt werden kann.

Es ist die Aufgabe der vorliegenden Erfindung ein Verfahren zum Ermitteln eines Druckes eines Fluids mit Hilfe einer Druckmesszelle sowie eine entsprechende Messanordnung so weiterzubilden, dass eine bessere Temperaturkompensation möglich wird.

Diese Aufgaben werden durch ein Verfahren gemäß Patentanspruch 1 sowie eine Messanordnung gemäß Patentanspruch 10 gelöst.

Ein erfindungsgemäßes Verfahren zum Ermitteln eines Druckes eines Fluids mit Hilfe einer Druckmesszelle, die einen Grundkörper, eine vorderseitig an dem Grundkörper angeordnete, durch den Druck des Fluids verformbare Membran, einen ersten Temperatursensor, der geeignet ausgebildet und angeordnet ist, eine erste Temperatur der Membran zu erfassen und einen zweiten Temperatursensor, der geeignet ausgebildet und angeordnet ist, eine zweite Temperatur des Grundkörpers zu erfassen, aufweist, wobei eine Temperaturdifferenz zwischen der ersten Temperatur und der zweiten Temperatur bestimmt wird, wobei die Druckmesszelle als keramische Druckmesszelle mit einer an der Membran angeordneten Membranelektrode und einer dieser gegenüberliegend an dem Grundkörper angeordneten Messelektrode ausgebildet ist und durch eine Druckänderung des auf die Membran wirkenden Fluids sich ein Abstand zwischen der Membranelektrode und der Messelektrode ändert, so dass eine Kapazitätsänderung detektierbar ist und die Druckmesszelle einen Messwert ausgibt, zeichnet sich dadurch aus, dass abhängig von einer zeitlichen Änderung der Temperaturdifferenz ein Messwert der Druckmesszelle unmittelbar oder abhängig von der Größe der Temperaturdifferenz korrigiert als Ausgabewert ausgegeben wird, so dass abhängig von der Größe der Änderung der Temperaturdifferenz eine dynamische, eine quasi statische und eine statische Phase unterschieden werden und abhängig von der jeweils geltenden Phase eine angepasste Messwertkorrektur durchgeführt wird.

Dadurch, dass eine Messwertkompensation bzw. -korrektur nunmehr abhängig von einer zeitlichen Änderung der Temperaturdifferenz stattfindet wird eine wesentlich feinere Auflösung bei der Erfassung der Änderungen aufgrund einer schnellen Temperaturänderung, eines sogenannten Thermoschocks, möglich, so dass in der Konsequenz eine bessere Messwertkompensation durchgeführt werden kann. Insbesondere wird es auf diese Weise möglich, die einzelnen Phasen auftretender Temperaturschwankungen in dynamische, quasi statische und statische Phasen zu unterscheiden und so eine jeweils angepasste Messwertkompensation durchzuführen.

Als dynamische Phase wird in der vorliegenden Anmeldung der Zeitraum einer Temperaturänderung bezeichnet, in dem eine Messwertkompensation abhängig von einer detektierten Temperaturdifferenz ohne Einbeziehung der zeitlichen Änderung der Temperaturdifferenz sowie eventuell weitere schwer zu bestimmende Parameter des Temperaturübergangs auf den Drucksensor nicht in ausreichender Genauigkeit möglich ist.

Als quasi statische Phase wird in der vorliegenden Anmeldung der Zeitraum bezeichnet, in dem ein auftretender Messfehler sich in ausreichende Genauigkeit direkt als Funktion der detektierten Temperaturdifferenz beschreiben lässt. Eine exakte Form dieser mathematischen Funktion hängt dabei stark von der Bauform des Sensors sowie den Positionen der eingesetzten Temperatursensoren ab und kann beispielsweise experimentell bestimmt werden.

Als statische Phase werden in der vorliegenden Anmeldung die Zeitabschnitte bezeichnet, in denen eine Änderung einer Temperaturdifferenz zwischen der Membran und dem Grundkörper des Drucksensors nicht oder nur in sehr geringem Maße vorliegt und daher eine Messkompensation abhängig von der detektierten Temperaturdifferenz problemlos möglich ist.

Die Änderung der Temperaturdifferenz kann beispielsweise durch Bildung der zeitlichen Ableitung der Temperaturdifferenz bestimmt werden. Auf diese Weise lässt sich einfach die Größe der Änderung der Temperaturdifferenz und damit die Dynamik der einwirkenden Temperaturänderung sowie deren Ursache relativ genau bestimmen, so dass eine optimale Messwertkompensation ermöglicht wird.

In einer vorteilhaften Ausgestaltung wird ein Grenzwert für die Größe der Änderung der Temperaturdifferenz vorgegeben, wobei als Ausgabewert ein verzögerter Ausgabewert ausgegeben wird, wenn die Temperaturdifferenz ungleich 0 ist und ein Betrag der Änderung der Temperaturdifferenz über dem Grenzwert liegt (dynamische Phase), der abhängig von der Größe der Temperaturdifferenz korrigierte Messwert ausgegeben wird, wenn die Temperaturdifferenz ungleich 0 ist und ein Betrag der Änderung der Temperaturdifferenz unter dem Grenzwert liegt (quasistatische Phase) und der Messwert ausgegeben wird, wenn die Temperaturdifferenz 0 ist (statische Phase).

Durch Einführen eines derartigen Grenzwertes können durch betragsmäßige Bestimmungen der Änderung der Temperaturdifferenz die einzelnen Phasen eines Thermoschocks erkannt und entsprechend angepasste Kompensationsalgorithmen angewendet werden. Insbesondere kann es in der dynamischen Phase eines Thermoschocks sinnvoll sein, den vor Eintritt der dynamischen Phase ausgegebenen Ausgabewert weiter zu verzögern und während der dynamischen Phase dauerhaft auszugeben, da in diesem Zeitabschnitt eine von der Temperaturdifferenz abhängige Kompensation des Messwerts nur mit einem sehr großen Aufwand und unter Einbeziehung einer Vielzahl von schwer bestimmbaren Parametern möglich wäre.

Zusätzlich zu einer von der Größe der Änderung der Temperaturdifferenz abhängigen Kompensation der Messwerte kann eine Glättung des Ausgabewerts, beispielsweise durch Verzögerung, Integration oder Mittelwertbildung, mit zugehöriger Zeitkonstante des kompensierten Messwerts. Die Zeitkonstante kann dabei die Verzögerungszeit, das Integrationsintervall oder die Fensterbreite, abhängig von der verwendeten Glättung, sein.

Um einen stetigen Messwertverlauf zu erreichen kann es sinnvoll sein, die Glättung mit einer abnehmenden Zeitkonstanten ,insbesondere einer abhängig von einem Betrag der Temperaturdifferenz oder einem Betrag der Änderung der Temperaturdifferenz abnehmenden Zeitkonstante durchzuführen. Durch eine solche Verringerung der für die Glättung verwendeten Zeitkonstante wird eine abhängig von einem Betrag der Temperaturdifferenz oder einem Betrag der Änderung der Temperaturdifferenz erfolgende Reduktion der Glättung vorgenommen, die beispielsweise bei Vorliegen keiner Temperaturdifferenz oder keiner Änderung der Temperaturdifferenz zur Ausgabe des Messwertes als Ausgabewert führt.

Eine Größe der verwendeten Zeitkonstante kann linear von dem Betrag der Temperaturdifferenz oder dem Betrag der Änderung der Temperaturdifferenz abhängen, es sind aber auch quadratische oder exponentielle Abhängigkeiten sowie Abhängigkeiten in höheren Potenzen möglich.

Auf diese Weise kann ein schnelleres Abklingen der Messwertglättung in Richtung des tatsächlich anliegenden Messwertes erreicht werden.

Um besonders komplexe Kompensationsalgorithmen während der dynamischen Phase eines Temperaturschocks zu vermeiden, kann es sinnvoll sein, wenn der Ausgabewert, wenn die Temperaturdifferenz ungleich 0 ist und der Betrag der Änderung der Temperaturdifferenz über dem Grenzwert liegt, d. h. in der dynamischen Phase eingefroren wird.

Eine weitere Vereinfachung des Verfahrens kann erreicht werden, wenn stets eine Korrektur des Messwertes abhängig von der Temperaturdifferenz erfolgt, wenn der Betrag der Änderung der Temperaturdifferenz unter dem Grenzwert liegt. Konkret wird eine Korrektur des Messwerts abhängig von der Temperaturdifferenz damit sowohl in den quasi statischen als auch in den statischen Phasen durchgeführt, wobei eine Korrekturfunktion in der statischen Phase, wenn keine Temperaturdifferenz anliegt den Wert 0 aufweist.

Anstelle einer Berechnung des Ausgabewertes abhängig von einer Temperaturdifferenz sowie einer Änderung der Temperaturdifferenz anhand einer Funktion kann die Korrektur auch mittels einer abgespeicherten Korrekturtabelle erfolgen.

Eine erfindungsgemäße Messanordnung zum Ermitteln eines Drucks eines Fluids mit einer Druckmesszelle, die einen Grundkörper, eine vorderseitig an dem Grundkörper angeordnete, durch den Druck des Fluids verformbare Membran, einen ersten Temperatursensor, der geeignet ausgebildet und angeordnet ist, eine Temperatur der Membran zu erfassen, und einen zweiten Temperatursensor, der geeignet ausgebildet und angeordnet ist, eine zweite Temperatur des Grundkörpers zu erfassen, aufweist, wobei eine Temperaturdifferenz zwischen der ersten Temperatur und der zweiten Temperatur bestimmt wird, wobei die Druckmesszelle als keramische Druckmesszelle mit einer an der Membran angeordneten Membranelektrode und einer dieser gegenüberliegend an dem Grundkörper angeordneten Messelektrode ausgebildet ist und durch eine Druckänderung des auf die Membran wirkenden Fluids sich ein Abstand zwischen der Membranelektrode und der Messelektrode ändert, so dass eine Kapazitätsänderung detektierbar ist und die Druckmesszelle einen Messwert ausgibt, zeichnet sich dadurch aus, dass die Messanordnung eine Kompensationseinrichtung aufweist, der die erste Temperatur und die zweite Temperatur sowie der Messwert zugeführt sind, und an der ausgangsseitig abhängig von einer zeitlichen Änderung der Temperaturdifferenz der Messwert der Druckmesszelle unmittelbar oder abhängig von der Größe der Temperaturdifferenz korrigiert als Ausgabewert abgreifbar ist, so dass abhängig von der Größe der Änderung der Temperaturdifferenz eine dynamische, eine quasi statische und eine statische Phase unterschieden werden und abhängig von der jeweils geltenden Phase eine angepasste Messwertkorrektur durchgeführt wird.

Die Kompensationseinrichtung kann vorteilhafterweise eine Differenzierstufe zur Bestimmung einer Größe der zeitlichen Änderung der Temperaturdifferenz aufweisen.

In einer Weiterbildung der Messanordnung kann die Kompensationseinrichtung ein Verzögerungsglied, einen Integrator oder einen Filter zur Glättung des Ausgabewerts mit einer Zeitkonstanten aufweisen.

Durch Glättung kann insbesondere erreicht werden, dass temperaturinduzierte schnelle Änderungen des Messwertes in dem Ausgangswert nur reduzierten Einfluss haben.

Um den Einfluss sehr schneller Temperaturänderungen während eines Thermoschocks auf den Ausgabewert weiter zu reduzieren kann die Kompensationseinrichtung zusätzlich ein Verzögerungsglied aufweisen, das beispielsweise als Sample-and-hold-Stufe ausgebildet sein kann.

Die vorliegende Erfindung wird nachfolgend anhand von Ausführungsbeispielen und Bezugnahme auf die beigefügten Figuren eingehend erläutert.

Es zeigen:

Figur 1    eine beispielhafte keramische Druckmesszelle, bei der das Verfahren der vorliegenden Erfindung zum Einsatz kommen kann und

Figur 2    eine beispielhafte metallische Druckmesszelle, bei der das vorliegende Verfahren ebenfalls verwendet werden kann.

Figur 3a     eine erste Variante eines Verfahrens zum Ermitteln eines Drucks eines Fluids mit einer beispielhaften Messwertkompensation,

Figur 3b     eine vereinfachte Ausgestaltung des Verfahrens aus Figur 1a,

Figur 4     die Abhängigkeit der auftretenden Messwertabweichung von einer gemessenen Temperaturdifferenz,

Figur 5     den Messwertverlauf bei einer schnellen Temperaturänderung für unterschiedliche Messwertkompensationen,

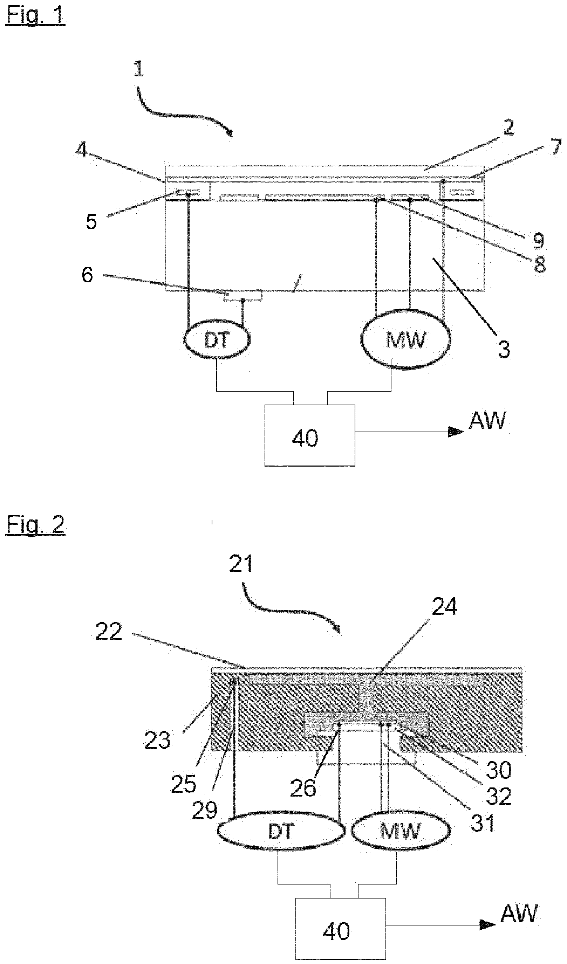

Figur 1 zeigt eine beispielhafte Druckmesszelle 1, die vorliegend als keramische Druckmesszelle 1 ausgebildet ist mit einer vorderseitig an der Druckmesszelle 1 angeordneten Membran 2, die durch den Druck eines auf die Membran 2 einwirkenden Fluids verformbar ist. Die Membran 2 ist über eine umlaufende Fügung 4, die vorliegend als Glasfügung ausgebildet ist an einem Grundkörper 3 der Druckmesszelle 1, der ebenfalls aus keramischem Material besteht, befestigt. An der Membran 2 ist eine Membranelektrode 7 und dieser gegenüberliegend an dem Grundkörper 3 eine Messelektrode 8 sowie eine die Messelektrode 8 umlaufend umgebende Referenzelektrode 9 angeordnet.

Durch eine Druckänderung des auf die Membran 2 wirkenden Fluids ändert sich ein Abstand zwischen der Membranelektrode 7 und der Messelektrode 8, so dass eine Kapazitätsänderung detektierbar ist. Die Referenzelektrode 9 und eine zwischen der Membranelektrode 7 und Referenzelektrode 9 gebildete Referenzkapazität kann zur Kompensation negativer Einflüsse auf die Messkapazität zwischen der Membranelektrode 7 und der Messelektrode 8 benutzt werden. Der aus diesen Kapazitätswerten gebildete Wert wird nachfolgend als Messwert MW bezeichnet.

Die Druckmesszelle 1 weist ferner einen ersten Temperatursensor 5 auf, der im vorliegenden Ausführungsbeispiel in der Glasfügung 4 zwischen der Membran 2 und dem Grundkörper 3 angeordnet ist. Der erste Temperatursensor 5 kann dafür beispielsweise vorderseitig an dem Grundkörper 3, d. h. an einer Oberfläche des Grundkörpers 3, die der Membran 2 zugewandt ist, angeordnet oder vollständig in die Glasfügung 4 eingebettet sein. Alternativ ist auch eine Temperaturmessung direkt an der Membran 2, beispielsweise über einen an der Membran 2 angeordneten Temperatursensor denkbar. Dieser erste Temperatursensor 5 ist damit membranseitig, nachfolgend auch vorderseitig genannt, an der Druckmesszelle 1 angeordnet, so dass auf die Druckmesszelle 1 wirkende Temperaturänderungen, insbesondere Thermoschocks in Form von schnellen Temperaturänderungen, beispielsweise durch Einwirken eines Fluids geänderter Temperatur, von diesem ersten Temperatursensor 5 annähernd unmittelbar erfasst werden können.

Ein zweiter Temperatursensor 6 ist im vorliegenden Ausführungsbeispiel rückseitig an dem Grundkörper 3, d. h. an einer von der Membran 2 abgewandten Oberfläche des Grundkörpers 3 angeordnet. Auf die Druckmesszelle 1 einwirkende Temperaturänderungen werden von dem zweiten Temperatursensor 6 damit aufgrund der thermischen Kapazität des Grundkörpers 3 sowie aufgrund der durch den Abstand zwischen Membran 2 und Grundkörper 3 bestehenden thermischen Entkopplung von dem zweiten Temperatursensor 6 mit einer deutlichen Verzögerung aufgenommen. In der Druckmesszelle 1 besteht damit ein Temperaturgradient von ihrer Vorderseite, an der die Membran 2 sitzt, zu ihrer Rückseite.

Wie bereits dargestellt wirken sich solche Temperaturgradienten bzw. Temperaturunterschiede zwischen Vorder- und Rückseite einer Druckmesszelle 1 auf die von der Druckmesszelle 1 ausgegebenen Messwerte MW aus, so dass aufgrund einer Temperaturänderung beispielsweise eine Messwertänderung eintritt, obwohl keine Druckänderung vorliegt.

Im vorliegenden Ausführungsbeispiel sind der erste Temperatursensor 5 und der zweite Temperatursensor 6 mit einem Block verbunden, in dem eine Temperaturdifferenz DT bestimmt wird. Die Membranelektrode 7, die Messelektrode 8 und die Referenzelektrode 9 sind ihrerseits mit einem Block verbunden, in dem aus den durch die einzelnen Elektroden 7, 8, 9 gebildeten Kapazitäten der Messwert MW bestimmt wird. Die Temperaturdifferenz DT und der Messwert MW sind einer Kompensationseinrichtung 40 zugeführt, an der ausgangsseitig ein Ausgabewert AW, der einem temperaturkompensierten Messwert entspricht, abgreifbar ist. In der Kompensationseinrichtung 40 wird der Messwert MW abhängig von einer Größe der Änderung der Temperaturdifferenz DT in Abhängigkeit von der Temperaturdifferenz korrigiert. Die zeitliche Änderung der Temperaturdifferenz DT wird in der Kompensationseinrichtung sich in einem Differenzierglied durch Bildung der zeitlichen Ableitung der Temperaturdifferenz dDT/dt ermittelt. Konkret werden im vorliegenden Ausführungsbeispiel abhängig von einem vorgegebenen Grenzwert L für die Größe der zeitlichen Änderung der Temperaturdifferenz und abhängig von einem absoluten Wert der Temperaturdifferenz DT als Ausgabewert folgende Fälle unterschieden und die dementsprechenden Werte als Ausgabewert AW ausgegeben:

| Bedingung | Phase | Ausgabewert |
|---|---|---|
| $DT \neq 0 \; \wedge \; \dfrac{dDT}{dt} > L$ | *dynamische* | $AW(i) = AW(i-1)$ |

(fortgesetzt)

| Bedingung | Phase | Ausgabewert |
|---|---|---|
| $DT \neq 0 \wedge \dfrac{dDT}{dt} < L$ | quasi-statische | $AW(i) = MW(i) + f(DT)$ |
| $DT = 0$ | statische | $AW(i) = MW(i)$ |

Es werden also abhängig von der Größe der Änderung der Temperaturdifferenz DT eine dynamische Phase, eine quasistatische Phase und eine statische Phase unterschieden, wobei abhängig von der jeweils geltenden Phase eine angepasste Messwertkorrektur durchgeführt wird.

In der dynamischen Phase ist eine Korrektur des ermittelten Messwertes MW aufgrund der sehr schnellen Änderung der Temperaturdifferenz DT zwischen Vorderseite und Rückseite der Druckmesszelle 1 nur mit sehr großem Aufwand möglich, so dass der letztgeltende Ausgabewert AW vor Beginn der dynamischen Phase als Ausgabewert AW weiterhin ausgegeben wird. Dies ist im vorliegenden Fall problemlos möglich, da die dynamische Phase eines Thermoschocks auf eine keramische Druckmesszelle typischerweise weniger als eine Sekunde lang andauert.

In der quasistatischen Phase des Thermoschocks erfolgt eine Kompensation des Messwertes MW mit einer Funktion der Temperaturdifferenz (DT), wodurch temperaturinduzierte Messwertänderungen kompensiert werden können.

In statischen Phasen, in denen keine Temperaturdifferenz DT zwischen der Vorderseite und der Rückseite der Druckmesszelle 1 gemessen wird, wird als Ausgabewert AW der Messwert MW ohne weitere Kompensation ausgegeben.

Der Ausgabewert AW kann zusätzlich zur Erreichung eines glatten stetigen Messwertverlaufes durch Integration mit einer dynamisch angepassten Integrationszeit geglättet werden. Alternativ kann beispielsweise eine gleitende Mittelwertbildung mit einem Fensterfilter mit vom Betrag der Temperaturdifferenz oder einem Betrag der Änderung der Temperaturdifferenz abhängigen Fensterbreite erfolgen.

Figur 2 zeigt eine metallische Druckmesszelle 21, mit einem Grundkörper 23, an dem vorderseitig, d. h. zu einem auf die Druckmesszelle 21 wirkenden Fluid hin eine Membran 22 angeordnet ist. Die Druckmesszelle 21 des vorliegenden Ausführungsbeispiels weist eine mit einem Übertragungsmedium, vorliegend einem Öl gefüllte Übertragungskammer 24 auf. Durch das in der Übertragungskammer 24 befindliche Öl wird ein auf die Membran 22 wirkender Druck auf einen innerhalb der Übertragungskammer 24 an einer diese rückseitig verschließenden Glasdurchführung 31 angeordneten Messchip 30 übertragen. Der Messchip 30 ist an der Glasdurchführung 31 über eine Klebung 32 befestigt und über. Durch Kontaktierungen elektrisch kontaktiert.

Ein erster Temperatursensor 25 ist in einer Bohrung 29 in dem Grundkörper 23 der Messzelle 21 angeordnet und in der Nähe der Membran 22 positioniert. Aufgrund dieser Positionierung wirken auf die Druckmesszelle 21 wirkende Temperaturänderungen des Fluids unmittelbar auf den ersten Temperatursensor 25. Ein zweiter Temperatursensor 26 ist im vorliegenden Ausführungsbeispiel in den Sensorchip 30 integriert und damit innerhalb der Druckmesszelle 21 im Bereich der Übertragungskammer 24 angeordnet. Eine von dem Sensorchip 30 ermittelter Messwert MW sowie eine zwischen dem ersten Temperatursensor 25 und dem zweiten Temperatursensor 26 ermittelte Temperaturdifferenz DT sind einer Kompensationseinrichtung 40, an der ausgangsseitig ein Ausgabewert AW greifbar ist, zugeführt. Die Kompensationseinrichtung 40 kann wie in Zusammenhang mit Figur 1 beschrieben aufgebaut sein, wobei aber die einzelnen Kompensationsfunktionen und Temperaturabhängigkeiten die Positionierung der Temperatursensoren 25, 26 innerhalb der Messzelle 21 sowie deren thermische Eigenschaften angepasst sind.

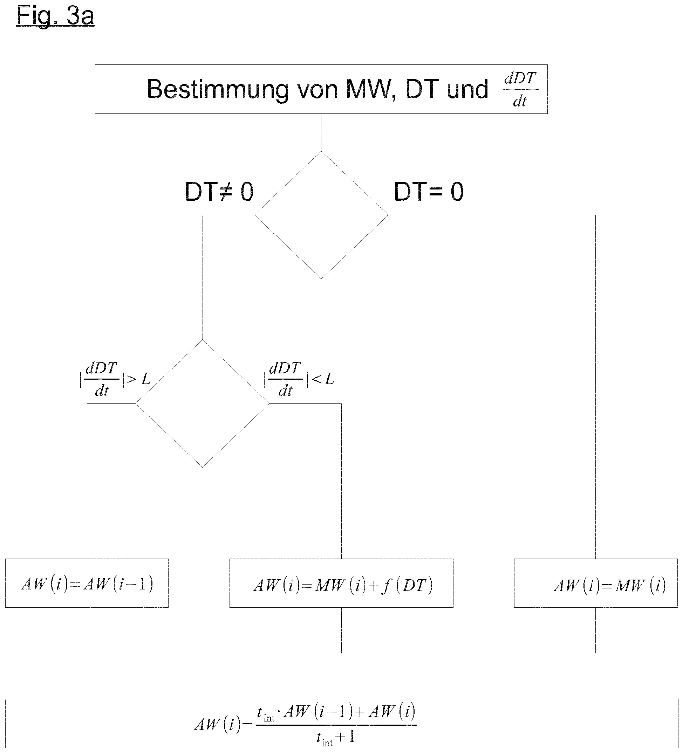

In Figur 3a ist ein beispielhafter Ablauf eines Verfahrens zur Ermittlung des Druckes eines Fluids mit Hilfe einer Druckmesszelle 1 dargestellt.

In einem ersten Schritt wird der Messwert MW, die Temperaturdifferenz DT zwischen den zwei vorgesehenen Temperatursensoren und eine Änderung der Temperaturdifferenz DT in Form der zeitlichen Ableitung dDT/dt bestimmt. Abhängig davon, ob eine Temperaturdifferenz DT zwischen den beiden Temperatursensoren besteht und abhängig von einer Größe der Änderung der Temperaturdifferenz werden eine dynamische Phase, eine quasistatische Phase und eine statische Phase unterschieden.

In der dynamischen Phase ist die Temperaturdifferenz DT ungleich 0 und der Betrag der Ableitung der Temperaturdifferenz nach der Zeit dDT/dt ist größer als ein vorgegebener Grenzwert L. In diesem Fall wird als Ausgabewert zum Zeitpunkt i der letztgeltende Ausgabewert AW (i-1) ausgegeben. Konkret bedeutet das, dass während der dynamischen Phase der letzte vor der dynamischen Phase geltende Ausgabewert AW eingefroren wird gemäß

$$AW(i) = AW(i-1) \;\bigg|\; DT \neq 0 \wedge \left|\frac{dDT}{dt}\right| > L$$

In der quasistatischen Phase ist, die Temperaturdifferenz DT ungleich 0 und der Betrag der zeitlichen Änderung der Temperaturdifferenz dDT/dt ist kleiner als der vorgegebene Grenzwert. In der quasistatischen Phase wird als Ausgabewert AW zum Zeitpunkt i AW (i) der zum Zeitpunkt i ermittelte Messwert MW(i) kompensiert durch eine von der Temperaturdifferenz DT abhängige Funktion F(DT) ausgegeben gemäß

$$AW(i) = MW(i) + F(DT) \quad \left| \; DT \neq 0 \; \wedge \; \left| \frac{dDT}{dt} \right| < L \right.$$

In der statischen Phase ist die Temperaturdifferenz DT gleich und es existiert dementsprechend auch keine Änderung der Temperaturdifferenz DT. In der statischen Phase wird als Ausgabewert zum Zeitpunkt i AW(i) der Messwert zum Zeitpunkt i MW(i) ausgegeben gemäß

$$AW(i) = MW(i) \quad \left| DT = 0 \right.$$

Zur weiteren Verbesserung der so ermittelten Ausgabewerte AW kann außerdem eine Glättung der Ausgabewerte, beispielsweise durch Verzögerung erfolgen. Beispielsweise kann dies gemäß der nachfolgend wiedergegebenen Formel (PT1-Glied) erfolgen:

$$AW(i) = \frac{t_{int} \cdot AW(i-1) + AW(i)}{t_{int} + 1}$$

Wobei $t_{int}$ die Zeitkonstante, AW(i-1) den Ausgabewert zum Zeitpunkt i-1 und AW(i) den Ausgabewert zum Zeitpunkt i darstellt. Die Zeitkonstante $t_{int}$ kann dabei eine Funktion des Betrags der Temperaturdifferenz f(|DT|) oder eine Funktion des Betrags der Änderung der Temperaturdifferenz f(|dDT/dt|) sein gemäß

$$t_{int} = f(|DT|) \quad \text{oder} \quad t_{int} = f(\left| \frac{dDT}{dt} \right|)$$

Auf diese Weise wird ein stetiger Verlauf der Ausgabewerte AW erreicht, da die Zeitkonstante $t_{int}$ mit abnehmender Temperaturdifferenz DT bzw. abnehmender Änderung der Temperaturdifferenz geringer wird.

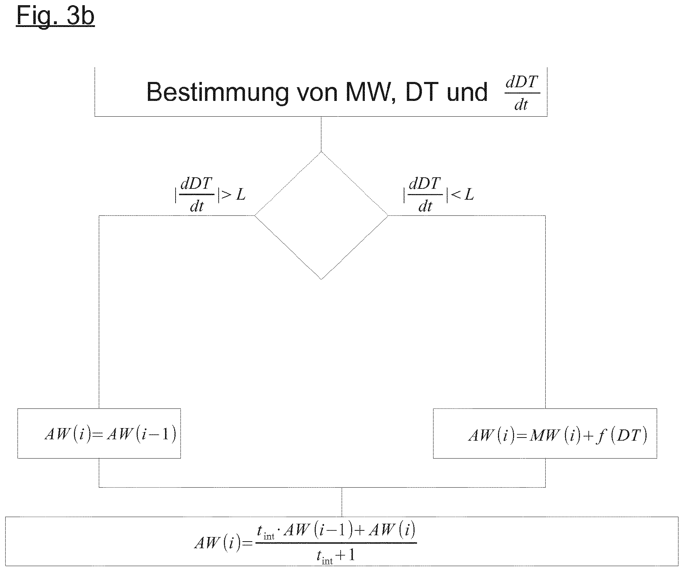

In Figur 3b ist eine vereinfachte Variante des in Figur 3a dargestellten, Verfahrens dargestellt, wobei nach der Bestimmung des Messwertes MW, der Temperaturdifferenz DT und der zeitlichen Änderung der Temperaturdifferenz in Form der Ableitung dDT/dt eine Unterscheidung lediglich in zwei Fälle erfolgt, wobei einerseits die dynamische Phase und andererseits die quasistatische und statische Phase unterschieden werden. Eine Unterscheidung kann dabei ausschließlich durch Betrachtung des Betrags der Änderung der Temperaturdifferenz erfolgen, wobei bei Überschreiten des Grenzwertes L die dynamische Phase und bei Unterschreiten des Grenzwertes L die quasistatische oder statische Phase vorliegt.

In der dynamischen Phase wird als Ausgabewert zum Zeitpunkt i AW(i) der letztgeltende Ausgabewert zum Zeitpunkt i-1 AW(i-1) ausgegeben und damit der vor Eintritt der dynamischen Phase letztgeltende Ausgabewert AW eingefroren. Im zweiten Fall, d. h. bei Vorliegen der quasistatischen oder statischen Phase wird als Ausgabewert zum Zeitpunkt i AW(i) der Messwert zum Zeitpunkt i kompensiert mit einer von der Temperaturdifferenz DT abhängigen Funktion f(DT) ausgegeben. In dieser Variante wird davon ausgegangen, dass die von der Temperaturdifferenz DT abhängige Funktion f(DT) für die Fälle, in denen keine Temperaturdifferenz DT vorliegt, den Wert 0 hat.

Anschließend werden die Ausgabewerte zum Zeitpunkt i AW(i) entsprechend der im Zusammenhang der mit dem Verfahren aus Figur 3a beschriebenen Funktion geglättet.

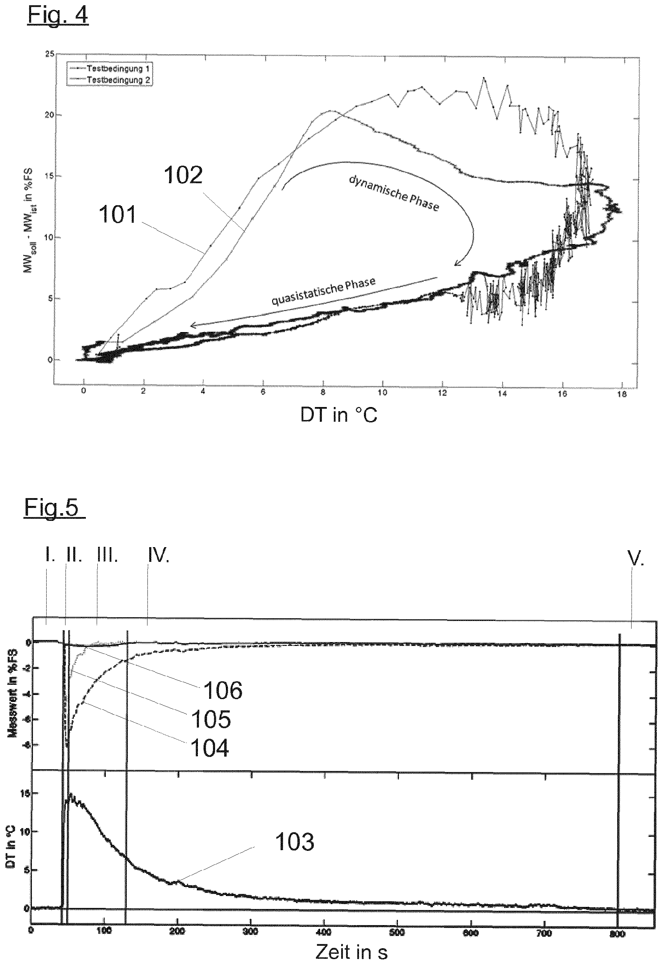

Figur 4 zeigt die Abhängigkeit der auftretenden Messwertabweichung $MW_{soll}$ - $MW_{ist}$ in Prozent des durch den Sensor abgedeckten Messbereichs von der momentanen Temperaturdifferenz DT für zwei unterschiedliche Testbedingungen. Testbedingung 1 (Kurve 101) beinhaltet einen schnellen Temperaturwechsel ohne nennenswerte Druckänderung, während in Testbedingung 2 (Kurve 102) gleichzeitig während des Temperaturwechsels eine Druckänderung am Sensor auftrifft.

In der vorliegenden Darstellung können die dynamische Phase und die quasistatische Phase daran unterschieden werden, dass während der quasistatischen Phase die auftretende Messwertabweichung nur von der Größe der Temperaturdifferenz DT abhängt (die beiden Kurven decken sich). Während der dynamischen Phase liegen die Kurven deutlich auseinander, was bedeutet, dass eine Korrektur nur in Abhängigkeit der Temperaturdifferenz (DT) nicht möglich ist.

In Figur 5 ist der Messwertverlauf einer keramischen Druckmesszelle 1, wie sie in Figur 1 dargestellt ist bei einem Thermoschock ohne Korrektur (Kurve 104), ohne Berücksichtigung der dynamischen Phase (Kurve 105) und mit Kompensation der dynamischen Phase (Kurve 106) dargestellt. Der Temperaturverlauf ist unterhalb der Messwerte in Kurve 103 gezeigt, wobei die ermittelte Temperaturdifferenz DT aufgetragen ist.

Dargestellt ist der Messwertverlauf bei Einwirken eines Temperaturschocks ohne dass eine Änderung des anliegenden Drucks stattfindet.

In Figur 5 sind außerdem die unterschiedlichen Phasen der Messwertkompensation eingezeichnet, wobei mit I und V die statischen Phasen gekennzeichnet sind, in denen die Messwerte MW der Druckmesszelle 1 ohne Korrektur ausgegeben werden. II kennzeichnet die dynamische Phase, in der in Kurve 106 der vor der dynamischen Phase letztgeltende Ausgabewert AW eingefroren wird. III kennzeichnet die quasistatische Phase, wobei in diesem Bereich für Kurve 106 eine kontinuierlich abklingende Glättung abhängig von der Temperaturdifferenz DT stattfindet. IV kennzeichnet weiterhin die quasistatische Phase, wobei keine zusätzliche Glättung der Kurve 106 durchgeführt wird.

Der mit Kurve 105 dargestellte Messwertverlauf zeigt eine Korrektur in Abhängigkeit von der Temperaturdifferenz DT gezeigt, wie sie gemäß der im Stand der Technik verwendeten Kompensationsalgorithmen möglich ist. Es ist dabei deutlich zu erkennen, dass sich der gemäß dem Stand der Technik kompensierte Messwertverlauf deutlich von der Kompensation gemäß der vorliegenden Anmeldung unterscheidet und insbesondere deutlich schlechtere Ergebnisse liefert.

Bezugszeichenliste

1     Druckmesszelle
2     Membran
3     Grundkörper
4     Fügung
5     erster Temperatursensor
6     zweiter Temperatursensor
7     Membranelektrode
8     Messelektrode
9     Referenzelektrode

21    Druckmesszelle
22    Membran
23    Grundkörper
24    Übertragungskammer
25    erster Temperatursensor
26    zweiter Temperatursensor
29    Bohrung
30    Sensorchip
31    Glasdurchführung
32    Klebung
40    Kompensationseinrichtung

101   Temperaturänderung
102   Temperaturänderung
103   Temperaturänderung
104   Messwert ohne Korrektur
105   Korrektur ohne Berücksichtigung der dynamischen Phase
106   Korrektur mit Berücksichtigung der dynamischen Phase
I-V   Messphase
L     Grenzwert
DT    Temperaturdifferenz
MW    Messwert
AW    Ausgabewert
$T_1$    erste Temperatur

$T_2$     zweite Temperatur

**Patentansprüche**

1.  Verfahren zum Ermitteln eines Drucks eines Fluids mit Hilfe einer Druckmesszelle (1), die einen Grundkörper (3), eine vorderseitig an dem Grundkörper angeordnete, durch den Druck des Fluids verformbare Membran (2), einen ersten Temperatursensor (5), der eine erste Temperatur ($T_1$) der Membran (2) erfassen kann, und einen zweiten Temperatursensor (6), der eine zweite Temperatur ($T_2$) des Grundkörpers (3) erfassen kann, aufweist, wobei eine Temperaturdifferenz (DT) zwischen der ersten Temperatur ($T_1$) und der zweiten Temperatur ($T_2$) bestimmt wird, wobei die Druckmesszelle (1) als keramische Druckmesszelle (1) mit einer an der Membran (2) angeordneten Membranelektrode (7) und einer dieser gegenüberliegend an dem Grundkörper (3) angeordneten Messelektrode (8) ausgebildet ist und durch eine Druckänderung des auf die Membran (2) wirkenden Fluids sich ein Abstand zwischen der Membranelektrode (7) und der Messelektrode (8) ändert, so dass eine Kapazitätsänderung detektierbar ist und die Druckmesszelle (1) einen Messwert (MW) ausgibt,
    **dadurch gekennzeichnet, dass**
    abhängig von einer zeitlichen Änderung der Temperaturdifferenz (DT) der Messwert (MW) der Druckmesszelle (1) unmittelbar oder abhängig von einer Größe der Temperaturdifferenz (DT) korrigiert als Ausgabewert (AW) ausgegeben wird, so dass abhängig von der Größe der Änderung der Temperaturdifferenz (DT) eine dynamische, eine quasi statische und eine statische Phase unterschieden werden und abhängig von der jeweils geltenden Phase eine angepasste Messwertkorrektur durchgeführt wird.

2.  Verfahren nach Anspruch 1,
    **dadurch gekennzeichnet, dass**
    die Änderung der Temperaturdifferenz (DT) durch Bildung der zeitlichen Ableitung dDT/dt der Temperaturdifferenz (DT) bestimmt wird.

3.  Verfahren nach einem der vorhergehenden Ansprüche,
    **gekennzeichnet, durch**
    einen vorgegebenen Grenzwert (L), wobei als Ausgabewert (AW)

    - der ein verzögerter Ausgabewert (AW) ausgegeben wird, wenn die Temperaturdifferenz (DT) ungleich 0 ist, und ein Betrag der Änderung der Temperaturdifferenz über dem Grenzwert (L) liegt,
    - der abhängig von der Größe der Temperaturdifferenz (DT) korrigierte Messwert (MW) ausgegeben wird, wenn die Temperaturdifferenz (DT) ungleich 0 ist und ein Betrag der Änderung der Temperaturdifferenz (DT) unter dem Grenzwert (L) liegt und
    - der Messwert (MW) ausgegeben wird, wenn die Temperaturdifferenz (DT) 0 ist.

4.  Verfahren nach einem der vorhergehenden Ansprüche,
    **dadurch gekennzeichnet, dass**
    zusätzlich eine Glättung des Ausgabewerts (AW) durch Verzögerung, Integration oder Mittelwertbildung erfolgt.

5.  Verfahren nach Anspruch 4,
    **dadurch gekennzeichnet, dass**
    eine von einem Betrag der Temperaturdifferenz (DT) oder einem Betrag der Änderung der Temperaturdifferenz (DT) abhängige Zeitkonstante für die Glättung des Ausgabewerts (AW) verwendet wird, wobei die Zeitkonstante mit abnehmender Temperaturdifferenz bzw. abnehmender Änderung der Temperaturdifferenz geringer wird.

6.  Verfahren nach Anspruch 5,
    **dadurch gekennzeichnet, dass**
    die Zeitkonstante linear, quadratisch, in einer höheren Potenz oder exponentiell von dem Betrag der Temperaturdifferenz (DT) oder dem Betrag der Änderung der Temperaturdifferenz (DT) abhängt.

7.  Verfahren nach einem der der Ansprüche 1 bis 3,
    **dadurch gekennzeichnet, dass**
    als Ausgabewert (AW) zum Zeitpunkt i wenn die Temperaturdifferenz (DT) ungleich 0 ist, und ein Betrag der Änderung der Temperaturdifferenz (DT) über dem Grenzwert (L) liegt, der letztgeltende Ausgabewert AW (i-1) ausgegeben wird.

**8.** Verfahren nach einem der vorhergehenden Ansprüche,
**dadurch gekennzeichnet, dass**
eine Korrektur des Messwerts (MW) abhängig von der Temperaturdifferenz immer erfolgt, wenn der Betrag der Änderung der Temperaturdifferenz (DT) unter dem Grenzwert (L) liegt.

**9.** Verfahren nach einem der vorhergehenden Ansprüche,
**dadurch gekennzeichnet, dass**
die Korrektur mittels einer abgespeicherten Korrekturtabelle erfolgt.

**10.** Messanordnung zum Ermitteln eines Drucks eines Fluids mit einer Druckmesszelle (1), die einen Grundkörper (3), eine vorderseitig an dem Grundkörper (3) angeordnete, durch den Druck des Fluids verformbare Membran (2), einen ersten Temperatursensor (5), der eine erste Temperatur ($T_1$) der Membran (2) erfassen kann, und einen zweiten Temperatursensor (6), der eine zweite Temperatur ($T_2$) des Grundkörpers (3) erfassen kann, aufweist, wobei die Druckmesszelle (1) als keramische Druckmesszelle (1) mit einer an der Membran (2) angeordneten Membranelektrode (7) und einer dieser gegenüberliegend an dem Grundkörper (3) angeordneten Messelektrode (8) ausgebildet ist und durch eine Druckänderung des auf die Membran (2) wirkenden Fluids sich ein Abstand zwischen der Membranelektrode (7) und der Messelektrode (8) ändert, so dass eine Kapazitätsänderung detektierbar ist und die Druckmesszelle (1) einen Messwert (MW) ausgibt,
**dadurch gekennzeichnet, dass**
die Messordnung eine Kompensationseinrichtung aufweist, der die erste Temperatur ($T_1$), die zweite Temperatur ($T_2$) und ein Messwert (MW) der Druckmesszelle (1) zugeführt sind, wobei eine Temperaturdifferenz (DT) zwischen der ersten Temperatur ($T_1$) und der zweiten Temperatur ($T_2$) gebildet wird und ausgangsseitig abhängig von einer zeitlichen Änderung der Temperaturdifferenz (DT) ein Messwert der Druckmesszelle unmittelbar oder abhängig von der Größe der Temperaturdifferenz (DT) korrigiert als Ausgabewert (AW) abgreifbar ist, so dass abhängig von der Größe der Änderung der Temperaturdifferenz (DT) eine dynamische, eine quasi statische und eine statische Phase unterschieden werden und abhängig von der jeweils geltenden Phase eine angepasste Messwertkorrektur durchgeführt wird.

**11.** Messanordnung gemäß Anspruch 10,
**dadurch gekennzeichnet, dass**
die Kompensationseinrichtung (40) eine Differenzierstufe aufweist.

**12.** Messanordnung nach einem der Ansprüche 10 bis 11,
**dadurch gekennzeichnet, dass**
die Kompensationseinrichtung (40)eine Glättung durch ein Verzögerungsglied durch einen Integrator oder ein Filter zur Bestimmung eines gleitenden Mittelwerts aufweist.

**13.** Messanordnung nach einem der Ansprüche 10 bis 12,
**dadurch gekennzeichnet, dass**
eine für die Glättung charakteristische Zeitkonstante abhängig von dem Betrag der Temperaturdifferenz oder dem Betrag der Änderung der Temperaturdifferenz mit abnehmender Temperaturdifferenz bzw. abnehmender Änderung der Temperaturdifferenz abklingt.

**14.** Messanordnung nach einem der Ansprüche 10 bis 13,
**dadurch gekennzeichnet, dass**
die Kompensationseinrichtung (40) ein Verzögerungsglied in Form einer Sample-and-hold-Schaltung aufweist.


**Claims**

**1.** Method for determining a pressure of a fluid with the aid of a pressure measurement cell (1), comprising a main body (3), a membrane (2) which is arranged at the front on the main body and can be deformed by the pressure of the fluid, a first temperature sensor (5) which can detect a first temperature ($T_1$) of the membrane (2), and a second temperature sensor (6) which can detect a second temperature ($T_2$) of the main body (3), wherein a temperature difference (DT) between the first temperature ($T_1$) and the second temperature (T2) is specified, wherein the pressure measurement cell (1) is designed as a ceramic pressure measurement cell (1) with a membrane electrode (7) arranged on the membrane (2) and a measuring electrode (8) arranged opposite the membrane electrode on the main body (3), and the distance between the membrane electrode (7) and the measuring electrode (8) changes due to a change of pressure of the fluid acting on the membrane (2), so that a change in capacitance can be detected and the pressure measurement cell (1) outputs a measured value (MW), **characterised in that** as a function of a temporal change of the temperature difference (DT) the measured value (MW) of the pressure measurement cell (1) is output directly or as a function of a value of the temperature difference (DT) this measured value is corrected and output as output value (AW), so that as a function of the magnitude of the change in the temperature difference (DT) a distinction can be made between a dynamic, a quasi-static and a static phase and an adapted measured value correction is carried out as a function of the respectively applicable phase.

2. Method according to claim 1, **characterised in that** the change in the temperature difference (DT) is determined by formation of the time derivative dDT/dt of the temperature difference (DT).

3. Method according to one of the preceding claims, **characterised by** a predetermined limiting value (L), wherein as output value (AW)

- a delayed output value (AW) is output if the temperature difference (DT) is not equal to 0, and an amount of the change in the temperature difference is above the limiting value (L),
- the measured value (MW) corrected as a function of the magnitude of the temperature difference (DT) is output if the temperature difference (DT) is not equal to 0, and an amount of the change in the temperature difference is above the limiting value (L), and
- the measured value (MW) is output if the temperature difference (DT) is 0.

4. The method according to one of the preceding claims, **characterised in that** in addition a smoothing of the output value (AW) takes place by delay, integration or mean value formation.

5. Method according to claim 4, **characterised in that** a time constant for smoothing of the output value (AW) is used, which is dependent upon an amount of the temperature difference (DT) or an amount of the change in the temperature difference (DT), wherein the time constant is lower as the temperature difference or the change in the temperature difference decreases.

6. Method according to claim 5, **characterised in that** the time constant is dependent linearly, quadratically, at a higher power or exponentially upon the amount of the temperature difference (DT) or the amount of the change in the temperature difference (DT).

7. Method according to one of claims 1 to 3, **characterised in that** the last applicable output value (i-1) is output as an output value (AW) at the time i if the temperature difference (DT) is not equal to 0, and an amount of the change in the temperature difference (DT) is above the limiting value (L).

8. The method according to one of the preceding claims, **characterised in that** a correction of the measured value (MW) always takes place as a function of the temperature difference if the amount of the change in the temperature difference (DT) is below the limiting value (L).

9. The method according to one of the preceding claims, **characterised in that** the correction takes place by mans of a stored correction table.

10. Measuring arrangement for determining a pressure of a fluid with a pressure measurement cell (1) comprising a main body (3), a membrane (2) which is arranged at the front on the main body (3) and can be deformed by the pressure of the fluid, a first temperature sensor (5) which can detect a first temperature ($T_1$) of the membrane (2), and a second temperature sensor (6) which can detect a second temperature ($T_2$) of the main body (3), wherein the pressure measurement cell (1) is designed as a ceramic pressure measurement cell (1) with a membrane electrode (7) arranged on the membrane (2) and a measuring electrode (8) arranged opposite the membrane electrode on the main body (3), and the distance between the membrane electrode (7) and the measuring electrode (8) changes due to a change of pressure of the fluid acting on the membrane (2), so that a change in capacitance can be detected and the pressure measurement cell (1) outputs a measured value (MW), **characterised in that** the measuring arrangement has compensation device, to which the first temperature ($T_1$), the second temperature ($T_2$) and a measured value (MW) of the pressure measurement cell (1) are supplied, wherein a temperature difference (DT) between the first temperature ($T_1$) and the second temperature ($T_2$) is formed, and a measured value of the pressure measurement cell can be tapped directly or corrected as a function of the magnitude of the temperature difference (DT) as an output value (AW) at the output as a function of a temporal change in the temperature difference (DT), so that as a function of the magnitude of the change in the temperature difference (DT) a distinction can be made between a dynamic, a quasi-static and a static phase and an adapted measured value correction is carried out as a function of the respectively applicable phase.

**11.** Measuring arrangement according to claim 10, **characterised in that** the compensation device (40) has a differentiation stage.

**12.** Measuring arrangement according to one of claims 10 to 11, **characterised in that** the compensation device (40) comprises smoothing by a delay element, by an integrator or a filter for determination of a moving mean value.

**13.** Method according to one of claims 10 to 12, **characterised in that** a time constant which is characteristic for the smoothing decays as a function of the amount of the temperature difference or the amount of the change in the temperature difference as the temperature difference or the change in the temperature difference decreases.

**14.** Measuring arrangement according to one of claims 10 to 13, **characterised in that** the compensation device (40) has a delay element in the form of a sample-and-hold circuit.

**Revendications**

**1.** Procédé permettant de déterminer la pression d'un fluide à l'aide d'une cellule de mesure (1) qui comporte un corps de base (3), une membrane (2) déformable par la pression du fluide montée à l'avant du corps de base, un premier capteur de température (5) pouvant détecter une première température ($T_1$) de la membrane (2) et un second capteur de température (6) pouvant détecter une seconde température ($T_2$) du corps de base (3), la différence de température (DT) entre la première température ($T_1$) et la seconde température ($T_2$) étant déterminée, la cellule de mesure de pression (1) étant réalisée sous la forme d'une cellule de mesure de pression céramique (1) équipée d'une électrode de membrane (7) montée sur la membrane (2) et d'une électrode de mesure (8) opposée à celle-ci montée sur le corps de base (3), et, une variation de la pression du fluide agissant sur la membrane (2), entraînant une variation de la distance entre l'électrode de membrane (7) et l'électrode de mesure (8) de sorte qu'une variation de capacité puisse être détectée et que la cellule de mesure de pression (1) délivre une valeur de mesure (MW),
**caractérisé en ce que**
la valeur de mesure (MW) de la cellule de mesure de pression (1) est délivrée en tant que valeur de sortie (AW) directement ou en fonction de la variation dans le temps de la différence de température (DT), en étant corrigée en fonction de la grandeur de la différence de température (DT), de sorte qu'en fonction de la grandeur de la variation de la différence de température (DT), on puisse faire la distinction entre une phase dynamique, une phase quasi-statique et une phase statique, et qu'une correction de la valeur de mesure adaptée puisse être effectuée en fonction de la phase respectivement présente.

**2.** Procédé conforme à la revendication 1,
**caractérisé en ce que**
la variation de la différence de température (DT) est déterminée en formant la dérivée en fonction du temps dDT/dt de la différence de température (DT).

**3.** Procédé conforme à l'une des revendications précédentes,
**caractérisé par**
une valeur limite (L) prédéfinie, procédé selon lequel, en tant que valeur de sortie (AW) :

- une valeur de sortie (AW) retardée est délivrée lorsque la différence de température (DT) est différente de 0 et que la grandeur de la variation de la différence de température est située au-dessus de la valeur de seuil (L),
- la valeur de mesure (MW) corrigée en fonction de la grandeur de la différence de température (DT) est délivrée lorsque la différence de température (DT) est différente de 0 et que la grandeur de la variation de la différence de la différence de température (DT) est située au-dessous de la valeur de seuil (L), et
- la valeur de mesure (MW) est délivrée lorsque la différence de température (DT) est égale à 0.

**4.** Procédé conforme à l'une des revendications précédentes,
**caractérisé en ce qu'**
on effectue en outre un lissage de la valeur de sortie (AW) par temporisation, intégration ou formation d'une valeur moyenne.

**5.** Procédé conforme à la revendication 4,
**caractérisé en ce qu'**
une constante de temps dépendant de la grandeur de la différence de température (DT) ou de la grandeur de la variation de la différence de température (DT) est utilisée pour le lissage de la valeur de sortie (AW), la constante de temps devenant plus faible lorsque la différence de température ou la variation de la différence de température diminue.

**6.** Procédé conforme à la revendication 5,
**caractérisé en ce que**
la constante de temps dépend selon une fonction linéaire, quadratique, de puissance plus élevée ou exponentielle de la grandeur de la différence de température (DT) ou de la grandeur de la variation de température (DT).

**7.** Procédé conforme à l'une des revendications 1 à 3,
**caractérisé en ce qu'**
en tant que valeur de sortie (AW) à l'instant i, la dernière valeur de sortie (AW (i-1)) présente est délivrée lorsque la différence de température (DT) est différente de 0 et que la grandeur de la variation de la différence de température (DT) est supérieure à la valeur de seuil (L).

**8.** Procédé conforme à l'une des revendications 1 à 3,
**caractérisé en ce qu'**
une correction de la valeur de mesure (MW) est toujours effectuée en fonction de la différence de température lorsque la grandeur de la variation de la différence de température (DT) est inférieure à la valeur limite (L).

**9.** Procédé conforme à l'une des revendications précédentes,
**caractérisé en ce que**
la correction est effectuée au moyen d'une table de correction enregistrée.

**10.** Dispositif de mesure permettant de déterminer la pression d'un fluide à l'aide d'une cellule de mesure de pression (1) qui comporte un corps de base (3), une membrane déformable par la pression du fluide (2) montée à l'avant du corps de base (3), un premier capteur de température (5) pouvant détecter une première température ($T_1$) de la membrane (2) et un second capteur de température (6) pouvant détecter une seconde température ($T_2$) du corps de base (3), la cellule de mesure de pression (1) étant réalisée sous la forme d'une cellule de mesure de pression céramique (1) comportant une électrode de membrane (7) montée sur la membrane (2) et une électrode de mesure (8) opposée à celle-ci, montée sur le corps de base (3), et une variation de la pression du fluide agissant sur la membrane (2), entraînant une variation de la distance entre l'électrode de membrane (7) et l'électrode de mesure (8) de sorte qu'une variation de capacité puisse être détectée, et que la cellule de mesure de pression (1) délivre une valeur de mesure (MW),
**caractérisé en ce que**
le dispositif de mesure comporte un dispositif de compensation auquel sont transmises la première température ($T_1$), la seconde température ($T_2$) et la valeur de mesure (MW) de la cellule (1), la différence de température (DT) entre la première température ($T_1$) et la seconde température ($T_2$) étant formée, et côté sortie, peut être saisie en tant que valeur de sortie (AW) en fonction de la variation dans le temps de la variation de température (DT) la valeur de mesure de la cellule de mesure de pression, directement, ou corrigée en fonction de la grandeur de la différence de température (DT), de sorte que, en fonction de la grandeur de la variation de la différence de température (DT), on puisse faire la distinction entre une phase dynamique, une phase quasi statique et une phase statique, et qu'une correction de la valeur de mesure adaptée puisse être effectuée en fonction de la phase présente.

**11.** Dispositif de mesure conforme à la revendication 10,
**caractérisé en ce que**
le dispositif de compensation (40) comporte un étage de différentiation.

**12.** Dispositif de mesure conforme à l'une des revendications 10 et 11,
**caractérisé en ce que**
le dispositif de compensation (40) comprend un lissage par un organe de temporisation, par un intégrateur ou un filtre pour déterminer une valeur moyenne de lissage.

**13.** Dispositif de mesure conforme à l'une des revendications 10 à 12,
**caractérisé en ce qu'**

une constante de temps caractéristique pour le lissage chute en fonction de la grandeur de la différence de température ou de la grandeur de la variation de la différence de la température, lorsque la différence de température diminue ou que la variation de la différence de température diminue.

**14.** Dispositif de mesure conforme à l'une des revendications 10 à 13,
**caractérisé en ce que**
le dispositif de compensation (40) comporte un organe de temporisation réalisé sous la forme d'un circuit d'échantillonnage blocage.

Fig. 1

Fig. 2

## Fig. 3a

$$\text{Bestimmung von MW, DT und } \frac{dDT}{dt}$$

DT$\neq$ 0          DT$=$ 0

$|\frac{dDT}{dt}| > L$          $|\frac{dDT}{dt}| < L$

$$AW(i) = AW(i-1)$$

$$AW(i) = MW(i) + f(DT)$$

$$AW(i) = MW(i)$$

$$AW(i) = \frac{t_{\text{int}} \cdot AW(i-1) + AW(i)}{t_{\text{int}} + 1}$$

Fig. 3b

$$\text{Bestimmung von MW, DT und } \frac{dDT}{dt}$$

$$|\frac{dDT}{dt}|>L \qquad\qquad |\frac{dDT}{dt}|<L$$

$$AW(i)=AW(i-1) \qquad\qquad AW(i)=MW(i)+f(DT)$$

$$AW(i)=\frac{t_{int}\cdot AW(i-1)+AW(i)}{t_{int}+1}$$

## Fig. 4

## Fig.5

**IN DER BESCHREIBUNG AUFGEFÜHRTE DOKUMENTE**

**In der Beschreibung aufgeführte Patentdokumente**

- DE 4111118 A1
- EP 0764839 A1
- WO 2015090771 A1
- EP 1186875 A2
- EP 2189774 A1
- US 2003221491 A1
- EP 0856726 A1
- US 5383367 A
- US 5394345 A
- EP 1857800 B1